# FASCICULE DE BREVET EUROPEEN

(11) **EP 1 462 045 B1**
(45) Date de publication et mention de la délivrance du brevet: **27.09.2006**
(21) Numéro de dépôt: 04370007.9
(22) Date de dépôt: 22.03.2004
(51) Int. Cl.: A47J 37/07

(54) **Barbecue à combustible solide**
Festbrennstoff-Grill
Solid fuel barbecue

(30) Priorité: 27.03.2003 FR 0303778
(43) Date de publication de la demande: 29.09.2004
(73) Titulaire: Garden Max S.A.S., 59100 Roubaix (FR)
(72) Inventeur: Descheemarker, Vianney, 59492 Villeneuve D'Ascq (FR)
(74) Mandataire: Hennion, Jean-Claude

(56) Documents cités:
- DE-A- 2 507 302
- FR-A- 2 815 239
- GB-A- 2 362 563
- US-A- 5 687 704

## Description

L'invention se rapporte à un barbecue à combustible solide.

Classiquement, un barbecue comprend un réceptacle ou brasero destiné à contenir une couche de charbon de bois, ce réceptacle étant porté par une structure d'appui.

Cette structure d'appui peut présenter différentes formes.

Depuis longtemps, afin d'améliorer le tirage du charbon de bois, le fond du réceptacle communique avec un tube dans lequel sont prévues des lumières généralement de section réglable afin de contrôler la combustion.

Une grille fixe ou amovible, placée dans le fond du réceptacle au dessus du tube, évite que les morceaux de charbon de bois tombent mais permettent toutefois de faire tomber les cendres.

Pour récupérer ces cendres, il est souvent prévu, à la base de ce tube, un cendrier amovible.

Ce cendrier est placé sous les lumières précitées.

Depuis quelques temps, est apparu, en complément de ces moyens, un dispositif d'allumage disposé immédiatement sous le brasero en sorte qu'une plaquette de combustible placée dans ce dispositif d'allumage puisse enflammer l'ensemble du charbon de bois.

Ce dispositif d'allumage se présente sous la forme essentiellement d'une plaque percée d'orifices pour le passage de l'air, cette plaque présentant une surface frontale pour ainsi constituer une sorte de tiroir.

La taille des orifices de la plaquette est relativement importante afin de permettre le passage des cendres pour les recueillir dans le cendrier.

Ce type de barbecue est intéressant mais on multiplie le nombre de pièces et lorsque l'on vide le cendrier, il faut également nettoyer le système d'allumage car la cendre reste partiellement sur la plaque trouée.

Il est connu du document DE 25 07 302 A un barbecue avec un cendrier placé dans la partie supérieure d'un tube.

L'invention se propose d'apporter un perfectionnement.

A cet effet, l'invention a pour objet un barbecue du type précité comprenant un réceptacle ou brasero pour un combustible solide dont le fond du réceptacle communique avec un tube comportant une arrivée d'air et un cendrier qui, constitué d'un fond et d'une paroi latérale délimitant ainsi un récipient, est engagé au travers d'une découpe du tube, ce barbecue étant caractérisé en ce que :
- la paroi latérale du cendrier est pourvue de lumières,
- la section horizontale du cendrier est inférieure à la section du tube afin de ménager des passages d'air et
- ce cendrier se situe immédiatement au dessous du réceptacle afin de pouvoir constituer une surface d'appui pour un moyen d'allumage tel une plaquette.

L'invention sera bien comprise à l'aide de la description ci-après faite à titre d'exemple non limitatif en regard du dessin ci-annexé qui représente schématiquement :

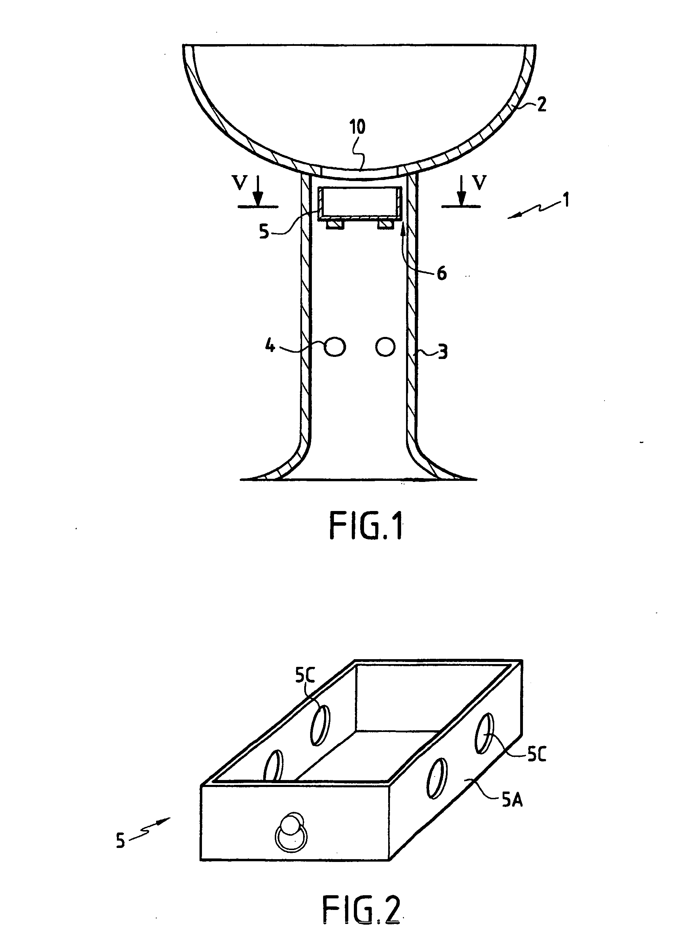

- figure 1 : une coupe verticale d'un barbecue,
- figures 2 et 3 : deux variantes d'un cendrier en perspective,
- figure 4 : une coupe verticale d'une autre variante du cendrier,
- figure 5 : une coupe selon V-V de la figure 1.

En se reportant au dessin, on voit un barbecue 1 à combustible solide.

Ce barbecue comprend un réceptacle 2 ou brasero pour un combustible solide dont le fond du réceptacle communique avec un tube 3 comportant une arrivée 4 d'air.

Cette arrivée d'air permet de créer un courant d'air ascensionnel favorisant la combustion du combustible solide.

Cette arrivée d'air est souvent pourvue d'un moyen de réglage permettant de gérer la section d'entrée.

En outre, ce barbecue comprend un cendrier 5 qui, constitué d'un fond et d'une paroi latérale délimitant ainsi un récipient, est engagé au travers d'une découpe du tube.

La hauteur de la paroi latérale de ce cendrier est généralement importante, de l'ordre de dix centimètres, afin de pouvoir recueillir les cendres résultant de la combustion du charbon de bois lors d'une utilisation.

Le tube précité peut éventuellement servir de structure d'appui au sol et donc peut être évasé en partie basse et alourdi pour constituer un appui stable.

Bien évidemment, la structure d'appui peut être totalement différente.

Selon l'invention :
- la paroi latérale 5A du cendrier est pourvue de lumières 5C,
- la section horizontale du cendrier 5 est inférieure à la section du tube 3 afin de ménager des passages 6 d'air entre le tube et la paroi latérale du cendrier et,
- ce cendrier se situe immédiatement au dessous du réceptacle 2 afin de pouvoir constituer une surface d'appui 7 pour un moyen 8 d'allumage tel une plaquette.

L'entrée 4 d'air dans le tube 3 se trouvant sous le cendrier 5, l'air peut ainsi dans un premier temps venir accompagner la combustion de la plaquette 8 de combustible placée dans le cendrier 5, cela en passant par les passages 6 d'air précités et les lumières 5C dans la paroi latérale du cendrier.

Cet air va donc favoriser la montée de la flamme pour enflammer le charbon de bois.

Lorsque la plaquette 8 sera consumée, le cendrier pourra alors avoir sa fonction initiale de récupérer les cendres.

La position de la plaquette 8 destinée à l'allumage par rapport au fond du réceptacle est importante.

En effet, si celle-ci est trop éloignée du fond du réceptacle 2, la flamme produite par cette plaquette ne permettra pas d'enflammer le charbon de bois.

Le volume du cendrier dépend notamment de sa section et de la hauteur de la paroi latérale et, par conséquent, pour augmenter la capacité volumique du cendrier, il faut augmenter la hauteur de la paroi latérale 5A et donc éloigner le fond 5B du cendrier du fond du brasero.

Pour obvier à cette difficulté, le cendrier comprend localement une zone surélevée 7 par rapport au fond du cendrier afin d'y placer une plaquette d'allumage.

Cette zone surélevée peut être concave afin de recevoir un liquide d'allumage.

Cette zone surélevée peut être obtenue par déformation de la matière constituant le cendrier ou présentée par une pièce rapportée sur le cendrier.

Comme indiqué plus haut, les lumières réalisées dans la paroi latérale sont destinées au passage de l'air de combustion.

Ces lumières seront situées à distance du bas de la paroi latérale afin d'éviter que les cendres puissent s'échapper.

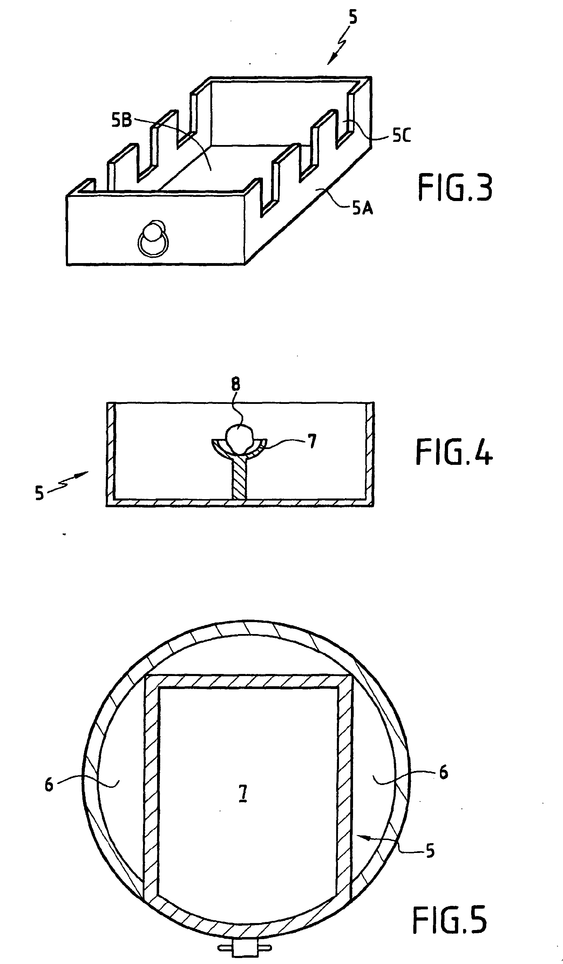

Ces lumières peuvent être de toutes formes géométriques et même formées une paroi en créneau (figure 3).

Afin de constituer facilement les passages d'air, le tube 3 sera de section circulaire et le fond du cendrier sera de section quadrangulaire mais l'utilisation d'un tube d'une autre section est possible.

Pour éviter que les cendres tombent au travers des passages d'air, l'orifice de communication aménagée dans le fond du brasero est, par exemple, à la dimension de la section du cendrier voire plus petit.

Le guidage du cendrier pourra être réalisé par les moyens connus tels un ensemble de cornières ou autres.

On a ainsi réalisé un barbecue facile d'utilisation.

## Revendications

1. Barbecue comprenant un réceptacle (2) ou brasero pour un combustible solide dont le fond du réceptacle communique avec un tube (3) comportant une arrivée (4) d'air et un cendrier (5) qui, constitué d'un fond et d'une paroi latérale délimitant ainsi un récipient, est engagé au travers d'une découpe du tube,
ce barbecue étant **CARACTERISE en ce que** :
- la paroi latérale (5A) du cendrier est pourvue de lumières (5C),
- la section horizontale du cendrier (5) est inférieure à la section du tube (3) afin de ménager des passages (6) d'air et
- ce cendrier se situe immédiatement au dessous du réceptacle (2) afin de pouvoir constituer une surface d'appui (7) pour un moyen (8) d'allumage.

2. Barbecue selon la revendication 1 **caractérisé en ce que** le cendrier comprend localement une zone surélevée (7) par rapport au fond du cendrier afin d'y placer une plaquette d'allumage.

3. Barbecue selon la revendication 2 **caractérisé en ce que** la zone surélevée est concave.

4. Barbecue selon la revendication 2 **caractérisé en ce que** la zone surélevée est obtenue par déformation de la matière constituant le cendrier.

5. Barbecue selon la revendication 2 **caractérisé en ce que** la zone surélevé est présentée par une pièce rapportée sur le cendrier.

6. Barbecue selon la revendication 1 **caractérisé en ce que** les lumières sont situées à distance du bas de la paroi latérale afin d'éviter que les cendres puissent s'échapper.

7. Barbecue selon la revendication 1 **caractérisé en ce que** le tube (3) est de section circulaire et le fond du cendrier est de section quadrangulaire.

8. Barbecue selon la revendication 1 **caractérisé en ce que** l'orifice de communication aménagée dans le fond du brasero est à la dimension de la section du cendrier voire plus petit.

## Claims

1. A barbecue comprising a receptacle (2) of brazier for a solid fuel, the receptacle's bottom of which communicates with a tube (3) including an air inlet (4) and a ash tray (5) which, consisting of a bottom and of a side wall thereby delimiting a container, is engaged through a cut-out of the tube,
this barbecue being **CHARACTERIZED in that**:
- the side wall (5A) of the ash tray is provided with lights (5C),
- the horizontal section of the ash tray (5) is less than the section of the tube (3) in order to provide air passages (6) and,
- this ash tray is located immediately below the receptacle (2) so as to form a supporting surface (7) for a lighting means (8).

2. The barbecue according to claim 1, **characterized in that** the ash tray locally comprises a raised area (7) relative to the bottom of the ash tray in order to place a lighting tablet therein.

3. The barbecue according to claim 2, **characterized in that** the raised area is concave.

4. The barbecue according to claim 2, **characterized in that** the raised area is obtained by deformation of the material forming the ash tray.

5. The barbecue according to claim 2, **characterized in that** the raised area is exhibited by an insert on the ash tray.

6. The barbecue according to claim 1, **characterized in that** the lights are located at a certain distance from the bottom of the side wall in order to avoid the possibility of the ashes escaping.

7. The barbecue according to claim 1, **characterized in that** the tube (3) is of circular section and the bottom of the ash tray is of quadrangular section.

8. The barbecue according to claim 1, **characterized in that** the communication orifice provided in the bottom of the brazier is of the size of the section of the ash tray, or even smaller.

## Patentansprüche

1. Grill, umfassend einen Behälter (2) oder Kohlenbecken für einen Festbrennstoff, bei dem der Boden des Behälters mit einem Rohr (3) in Verbindung steht, das einen Lufteintritt (4) und einen aus einem Boden und einer Seitenwand, die so einen Aufnahmebehälter begrenzen, bestehenden Ascheauffang (5) umfaßt, der mitten durch einen Querschnitt des Rohres eingesetzt ist,
wobei der Grill **dadurch gekennzeichnet ist, daß**:
- die Seitenwand (5A) des Ascheauffangs mit Öffnungen (5C) versehen ist,
- der Horizontalabschnitt des Ascheauffangs (5) unter dem Rohrquerschnitt (3) liegt, um Luftdurchgänge (6) einzurichten, und
- der Ascheauffang unmittelbar unter dem Behälter (2) liegt, damit er eine Stützfläche (7) für ein Anzündmittel (8) bilden kann.

2. Grill nach Anspruch 1, **dadurch gekennzeichnet, daß** der Ascheauffang lokal einen im Verhältnis zum Boden des Ascheauffangs angehobenen Bereich (7) umfaßt, um dort ein Anzündpellet anzuordnen.

3. Grill nach Anspruch 2, **dadurch gekennzeichnet, daß** der angehobene Bereich konkav ist.

4. Grill nach Anspruch 2, **dadurch gekennzeichnet, daß** der angehobene Bereich durch Verformung des den Ascheauffang bildenden Materials erhalten ist.

5. Grill nach Anspruch 2, **dadurch gekennzeichnet, daß** der erhöhte Bereich durch ein in den Ascheauffang eingebrachtes Stück gebildet wird.

6. Grill nach Anspruch 1, **dadurch gekennzeichnet, daß** die Öffnungen in einem Abstand zum Boden der Seitenwand angeordnet sind, um zu vermeiden, daß die Aschen entweichen können.

7. Grill nach Anspruch 1, **dadurch gekennzeichnet, daß** das Rohr (3) einen kreisförmigen Querschnitt und der Boden des Ascheauffangs einen viereckigen Querschnitt besitzt.

8. Grill nach Anspruch 1, **dadurch gekennzeichnet, daß** die Verbindungsöffnung, die im Boden des Kohlebeckens eingerichtet ist, die Abmessung des Ascheauffangabschnittes hat oder sogar kleiner ist.
